# EUROPÄISCHE PATENTSCHRIFT

(11) **EP 2 903 139 B1**
(45) Veröffentlichungstag und Bekanntmachung des Hinweises auf die Patenterteilung: **04.10.2017**
(21) Anmeldenummer: 14000387.2
(22) Anmeldetag: 04.02.2014
(51) Int. Cl.: H02K 1/27, H02K 1/28

(54) **Rotorblechpaket, insbesondere für einen Elektromotor**
Rotor lamination stack, in particular for an electric motor
Paquet de tôles de rotor, notamment pour un moteur électrique

(43) Veröffentlichungstag der Anmeldung: 05.08.2015
(73) Patentinhaber: Baumüller Nürnberg GmbH, 90482 Nürnberg (DE)
(72) Erfinder: Veeh, Michael, 97271 Kleinrinderfeld (DE)
(74) Vertreter: FDST Patentanwälte

(56) Entgegenhaltungen:
- DE-A1-102007 029 719
- KR-B1- 101 242 403
- US-A1- 2009 015 091

## Beschreibung

Die Erfindung betrifft ein Rotorblechpaket mit in Stapelrichtung übereinander angeordneten Einzelblechen mit einer Anzahl von zwischen radialen Vorsprüngen gebildeten Ausnehmungen, die im Blechstapel miteinander fluchten und umfangsseitig offene Aufnahmetaschen für Permanentmagnete bilden. Sie betrifft weiter einen Rotor mit einem solchen Rotorblechpaket und eine elektrische Maschine, insbesondere einen Elektromotor, mit einem solchen Rotor, wobei unter einer elektrischen Maschine auch ein Generator verstanden wird.

Eine elektrische Maschine und insbesondere auch eine elektromotorisch arbeitende Maschine, die als sogenannter Innenläufer ausgeführt ist, weist einen Rotor und einen Stator auf, der den Rotor unter Bildung eines (ringförmigen) Luftspalts konzentrisch umgibt. Bei einer elektronisch kommutierten Maschine (Drehstrommaschine) trägt der Stator eine üblicherweise aus mehreren Spulen gebildete, mehrphasige, insbesondere dreiphasige Feldwicklung zur Erzeugung eines Magnetfelds, in dem der dann üblicherweise mit Permanentmagneten versehene Rotor rotiert.

Der Rotor ist hierbei in der Regel aus einem von einer Rotor- oder Maschinenwelle getragenen wellenfesten Blechpaket mit einer Vielzahl von Einzelblechen gebildet, die den magnetischen Rückschluss für die in das Blechpaket eingesetzten Magnete bildet. Hierzu sind die Einzelbleche eine Anzahl von Ausnehmungen eingebracht, die im nachfolgend auch als Blechstapel bezeichnet Rotorblechpaket Aufnahmetaschen für die Magnete bereit stellen. Dabei werden zwei grundsätzlich unterschiedliche Blechstapeltypen bereit gestellt, nämlich ein Blechstapel mit im Querschnitt umfangsseitig geschlossenen Aufnahmetaschen oder mit umfangsseitig, das heißt zum Luftspalt hin offenen Aufnahmetaschen für die Permanentmagnete. Die Halterung der Magnete im Blechstapel kann durch Verklebung oder durch Klemmung erfolgen.

So ist beispielsweise aus der DE 10 2007 029 719 A1 eine elektrische Maschine mit einem Rotorblechpaket mit geschlossenen Aufnahmetaschen bekannt, in welche radiale und/oder tangentiale (azimutal) Klemmlaschen hineinragen, die an zumindest einige der den Blechstapel bildenden Einzelbleche angeformt sind. Eine Ausführungsform eines Blechpakets mit lediglich tangentialen Klemmlaschen ist auch aus der DE 20 2009 007 544 U1 bekannt, wobei im Blechstapel auf ein mit einer solchen Klemmlasche vorgesehenes Einzelblech ein solches ohne Klemmlasche folgt. Hierdurch wird erreicht, dass im Zuge des Einsetzens des Magneten in die Aufnahmetaschen die Klemmlaschen in Stapelrichtung und somit in Einsteckrichtung biegeelastisch ausweichen können, wodurch der jeweilige Magnet in der Aufnahmetasche fixiert wird.

Hinsichtlich des Blechstapeltyps mit umfangsseitig offenen Aufnahmetaschen für die Magnete ist es aus der WO 2010/106497 A2 und aus der WO 2011/147498 A2 bekannt, die Einzelbleche mit radialen Fortsätzen oder Vorsprüngen zu versehen, die asymmetrisch geformt und/oder asymmetrisch am Umfang des Einzelblechs verteilt angeordnet sind. Innerhalb des Blechstapels sind dann die Einzelbleche derart gegeneinander um die durch die Rotorwelle gebildete Achse verdreht, dass zwischen stets zwei umfangsseitig benachbarten radialen Fortsätzen zweier in Stapelrichtung (axial) benachbarter Einzelbleche eine gewünschte Klemmwirkung für die Magnete hergestellt ist. Die Klemmwirkung wird dadurch erzielt, dass die radialen Fortsätze im Wesentlichen im Uhrzeigersinn oder im Gegenuhrzeigersinn durch Verformung azimutal oder tangential ausweichen (WO 2011/147498 A2) oder durch eine pilzartige Ausgestaltung in Verbindung mit im Querschnitt trapezförmigen Magneten diese seitlich hinterschneiden oder an der dem Luftspalt zugewandten Magnetfläche übergreift (WO 2010/106497 A2).

Bei einem aus der DE 10 2005 048 731 A1 bekannten Rotor mit Einzelblechen gleichen Typs sind die radialen Vorsprüngen trapezförmigen und mit darin eingebrachten Durchgangsöffnungen versehen, wobei die Vorsprünge zur Fixierung der eingesetzten Magnete azimutal oder tangential gestaucht werden. Alternativ werden die Vorsprünge mittels eines Werkzeugs mit einer nach innen gerichteten Radialkraft beaufschlagt und durch konkave Umformung in die zwischen benachbarten radialen Fortsätzen gebildeten Ausnehmungen für die Magnete hinein gepresst. Auch hierbei erfolgt die Fixierung durch im Wesentlichen tangentiale beziehungsweise azimutale Verformung der radialen Vorsprünge sowie zusätzlich durch Hinterschneidung von wiederum im Querschnitt trapezförmig ausgeführten Magneten an deren schrägen Schmalseiten.

Aus der US 2009/0015091 A1 ist ein Rotorblechpaket mit in Stapelrichtung übereinander angeordneten Einzelblechen (Blechlamellen) mit einer Anzahl von zwischen radialen Vorsprüngen in Form von Haltelaschen gebildeten Ausnehmungen bekannt, die im Blechstapel miteinander fluchten und umfangsseitig offene Aufnahmetaschen für Permanentmagnete bilden. Die Permanentmagnete weisen Einkerbungen auf, in welche die Haltelaschen einer Blechlamelle eingreifen.

Der Erfindung liegt die Aufgabe zugrunde, ein hinsichtlich der Halterung von umfangsseitigen Permanentmagneten (Umfangsmagneten) und insbesondere hinsichtlich einer einfachen Handhabbarkeit bei der Magnetmontage besonders geeignetes Rotorblechpaket anzugeben, dessen Einzelbleche umfangsseitig offene Ausnehmungen zur Aufnahme der Umfangsmagneten aufweisen. Des Weiteren sollen ein Rotor mit einem solchen Rotorblechpaket und ein Elektromotor mit einem solchen Rotor angegeben werden.

Diese Aufgabe wird bezüglich des Rotorblechpaktes mit den Merkmalen des Anspruchs 1 und bezüglich des Rotors mit den Merkmalen des Anspruchs 9 sowie bezüglich der elektrischen Maschine, insbesondere eines Elektromotors, mit den Merkmalen des Anspruchs 11 erfindungsgemäß gelöst.

Hierzu weist das Rotorblechpaket mit in Stapelrichtung übereinander angeordnete Einzelbleche mit einer Anzahl von zwischen radialen Vorsprüngen gebildeten Ausnehmungen auf, die im Blechstapel miteinander fluchten und umfangsseitig offene Aufnahmetaschen für Permanentmagnete bilden, wobei zwei hinsichtlich der Vorsprünge zwei unterschiedliche Einzelblechtypen bereitgestellt sind. Diese sind im Blechstapel jeweils mehrfach, vorzugsweise in Stapelrichtung abwech selnd, angeordnet. Die Stapelrichtung entspricht der Axialrichtung des Rotors, d. h. dessen Rotorwelle, welche im Elektromotor die Motorwelle bildet.

Ein erster Einzelblechtyp weist eine Anzahl radialer Stützvorsprünge auf, während der zweite Einzelblechtyp eine entsprechende Anzahl radialer Haltevorsprünge mit sich in Umfangsrichtung erstreckenden Haltelaschen aufweist. Innerhalb des Blechstapels fluchten sowohl die Ausnehmungen beider Einzelblechtypen miteinander als auch die Stützvorsprüngen mit den Haltevorsprüngen. Mit anderen Worten sind die Einzelbleche im Blechstapel nicht gegeneinander verdreht, wobei zumindest innerhalb eines Teilblechpakets eines aus mehreren Teilblechpaketen zusammengesetzten Rotorblechpakets weder ein erster Einzelblechtyp gegenüber einem zweiten Einzelblechtyp noch die Einzelbleche gleichen Typs gegeneinander verdreht sind.

Die Haltevorsprünge des zweiten Einzelblechtyps weisen eine größere azimutale Ausdehnung auf als die Stützvorsprünge des ersten Einzelblechtyps. Somit überragen im Blechstapel die Haltelaschen des zweiten Einzelblechtyps den jeweiligen Stützvorsprung des ersten Einzelblechtyps in Umfangsrichtung. Vorzugsweise überragen die Haltelaschen den jeweiligen Stützvorsprung beidseitig, so dass sich im Blechstapel eine Haltelasche im Uhrzeigersinn und die andere Haltelasche im Gegenuhrzeigersinn über den jeweiligen Stützvorsprung des benachbarten Einzelblechs des ersten Blechtyps erstreckt.

Die Erfindung geht von der Überlegung aus, dass einerseits aufgrund der rotationsbedingt entstehenden Fliehkräfte zwar eine zuverlässige Halterung der Magnete in umfangsseitig geschlossenen Aufnahmetaschen des Rotorblechpaketes (vergrabene Magnete) einfacher und ohne unerwünschte Verklebungsmaßnahmen zu bewerkstelligen ist als in umfangsseitig offenen Aufnahmetaschen. Allerdings steht dieser Anordnung der Wunsch entgegen, die Magnete möglichst nahe zum Luftspalt anzuordnen. Andererseits erscheint zwar die Bereitstellung gleicher Einzelbleche herstellungsbedingt vorteilhaft. Allerdings ist dann üblicherweise ein montagetechnisch aufwendiges und zuverlässig durchzuführendes Verdrehen von Einzelblechen gegeneinander notwendig, um im Blechpaket die erforderlichen Freiräume zu schaffen, in welche an die Einzelblech angeformte Klemmlaschen im Zuge des Einsetzens der Magnete einbiegen können.

Um nun den Vorteil der nahen Anordnung der Magnete zum Luftspalt einerseits zu erhalten und ein montagetechnisch aufwendiges Verdrehen der Einzelbleche andererseits zu vermeiden, sind erfindungsgemäß zwei Einzelblechtypen vorgesehen, die sich lediglich in der Form bzw. Größe der die Magnetausnehmungen in Umfangsrichtung flankierenden Vorsprünge unterscheiden. Hierbei ist es weiterhin vorteilhaft,
wenn von dem einen Einzelblechtyp solche Vorsprünge als Stützvorsprunge bereitgestellt sind, die vorrangig lediglich ein Stützfunktion für die in Stapelrichtung - also in Bezug auf den Rotor axial - benachbarten Vorsprünge des anderen Einzelblechtyps bereitstellen, während letztere Vorsprünge als Haltevorsprünge vornehmlich die Haltefunktion der Magnete übernehmen.

Diese Haltefunktion ist als formschlüssige und geeigneterweise darüber hinaus als kraftschlüssige Fügeverbindung zwischen den Haltevorsprüngen und den Magneten realisiert, wobei zweckmäßigerweise ein Klemmung durch biegeelastische Haltelaschen dieser Haltevorsprünge, insbesondere im Zuge des Einsetzens der Magnete in das Rotorblechpaket hergestellt wird. Aufgrund der vergleichsweise geringen Abmessung der Stützvorsprünge ist der für die Haltelaschen erforderliche Biegefreiraum bereitgestellt.

In vorteilhafter Ausgestaltung sind die zwischen den radialen Vorsprüngen gebildeten Ausnehmungen beider Einzelblechtypen kreisbogenförmig und mit gleicher Bogenlänge ausgeführt. Dementsprechend sind auch die darin eingesetzten Magnete an deren Anlageseite am Rotorblechpaket entsprechend kreisbogenförmig und mit entsprechender Bogenlänge ausgebildet. Die dem Luftspalt zugewandte Umfangsseite der Magnete ist ebenfalls derart kreisbogenförmig, dass im Montagezustand der Magnete im Rotorblechpaket die Gesamtumfangsfläche des Rotors zumindest annähernd ideal kreisförmig ist. Unterbrochen wird diese Kreisform lediglich im Bereich der radialen Vorsprünge, gegen welche sich die Magnete mit deren axialen Schmalseiten im Zuge der Fügeverbindung mit den radialen Vorsprüngen abstützen.

Besonders zweckmäßig ist eine symmetrische Ausgestaltung beider Blechtypen. Mit anderen Worten sind sowohl die Stützvorsprünge des ersten Einzelblechtyps als auch die Haltevorsprünge des zweiten Einzelblechtyps ebenso wie die jeweils dazwischen angeordneten Ausnehmungen symmetrisch. Im Blechstapel liegen somit die Stützvorsprünge und die Haltevorsprünge axial stets direkt übereinander, fluchten also miteinander. Ebenso fluchten die Ausnehmungen beider Einzelblechtypen miteinander. In Umfangsrichtung der Einzelblechtypen ist hierbei ge eigneterweise der Abstand zweier benachbarter Stützvorsprünge und zweier benachbarter Haltevorsprünge stets gleich, wobei auch der Abstand zweier benachbarter Stützelemente gleich dem Abstand zweier benachbarter Halteelemente ist.

Die Stützelemente sind geeigneterweise trapezförmig und bevorzugt durch Einbringung einer radialen Einkerbung schwalbenschwanzartig, wobei die vergleichsweise lange Grundseite der Trapezform dem Luftspalt zugewandt ist. Mit anderen Worten weiten sich die Stützvorsprünge zum Luftspalt hin auf. Die Haltevorsprünge des anderen Einzelblechtyps sind geeigneterweise etwa T-förmig. Der sich hierdurch ergebende, radial erstreckende Vertikalsteg der T-Form bildet den Anlagesteg dieses Haltevorsprungs, mit dem dieser an einem korrespondierenden Stützsteg des im Blechstapel folgenden anderen Einzelblechtyps anliegt. Der Quersteg dieser T-Form bildet in Umfangsrichtung an dessen Freienden die Haltelaschen. Auch in die derart geformten Haltevorsprünge kann eine radial eingezogene Einkerbung oder Sicke eingeformt sein. Dies erleichtert ein Verbiegen der Haltelaschen im Zuge der Magnetmontage zur Erzeugung der gewünschten Klemmkraft. Aufgrund der vergleichsweise geringen Abmessung der Stützvorsprünge bilden diese ein zuverlässiges Gegenlager, d. h. eine zuverlässige Stützanlage. Hierdurch wird im Zuge des Einsetzens der Magnete in das Rotorblechpaket lediglich die jeweilige Haltelaschen und gerade nicht der gesamte Haltevorsprung verformt.

Die Magnete weisen an deren den radialen Vorsprüngen zugewandten axialen Schmalseiten eine sich in Stapelrichtung erstreckende Axialnut oder Einkerbung auf. In diese Einkerbungen zweier einem radialen Vorsprung benachbarter Magnete ragen die Haltelaschen der Haltevorsprünge und die trapez- oder schwalbenschwanzförmigen Stützvorsprünge des anderen Einzelblechtyps hinein. Somit stellen diese Einkerbungen der Magnete einen Hinterschnitt für die Stützvorsprünge und insbesondere für die Haltevorsprünge bereit. Dadurch ist sichergestellt, dass sowohl die Stützvorsprünge der Einzelbleche des ersten Blechtyps als auch die Haltevorsprünge der Einzelbleche des zweiten Blechtyps mit den Magneten eine formschlüssige Fügeverbindung herstellen. Mittels der Haltelaschen der Haltevorsprünge des zweiten Einzelblechtyps wird darüber hinaus eine kraftschlüssige Verbindung als zuverlässige Klemmfixierung durch eine biegeelastische Laschenverformung hergestellt. Hierdurch können insbesondere auch Fertigungstoleranzen der Magnete und der Einzelbleche sowie des Rotorblechpakets in einfacher Weise und unter Bereitstellung einer Doppelfunktion dieser Haltevorsprünge ausgeglichen werden.

Das Rotorblechpaket kann aus mehreren, beispielsweise zwei Teilblechpaketen zusammengesetzt sein, wobei jedes Teilblechpaket aus einer Mehrzahl von Einzelblechen beider Blechtypen zusammengesetzt und mit den umfangsseitigen Magneten versehen ist. Die mit den Magneten versehenen Teilblechpakete können auf der Rotor- bzw. Maschinenwelle mit einem gewissen Verdrehwinkel angebracht werden, so dass eine Schränkung der Magnete am Rotor der elektrischen Maschine entsteht.

Nachfolgend werden Ausführungsbeispiele der Erfindung anhand einer Zeichnung näher erläutert. Darin zeigen:
- Fig. 1: In perspektivischer Darstellung einen Rotor mit einer Rotor-welle und darauf wellenfest sitzendem Rotorblechpaket mit zwei Einzelblechtypen und umfangsseitigen Magneten in zwei gegeneinander verdrehten Teilblechpaketen,
- Fig. 2a und 2b: den ersten bzw. zweiten Einzelblechtyp mit kreisbogenförmigen Ausnehmungen und unterschiedlichen radialen Vorsprüngen zur Magnetfixierung, und
- Fig. 3: einen Ausschnitt III aus Fig. 1 in größerem Maßstab mit Blick in einen Einschnitt im Bereich einer Fügeverbindung zweier benachbarter Magnete mit dazwischen angeordneten radialen Vorsprüngen.

Einander entsprechende Teile sind in allen Figuren mit dem gleichen Bezugszeichen versehen.

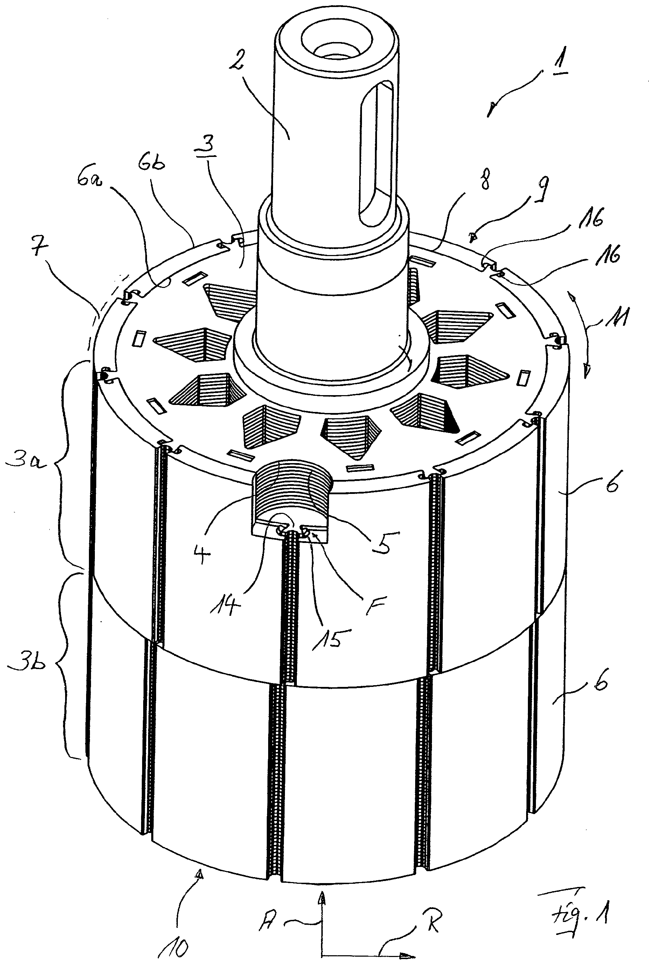

Fig. 1 zeigt in perspektivischer Darstellung einen Rotor 1 mit einem auf einer Welle 2 wellenfest sitzenden Rotorblechpaket 3 mit in Stapelrichtung A übereinander angeordneten Einzelblechen eines ersten Einzelblechtyps 4 und eines zweiten Einzelblechtyps 5. Am oder im Rotorblechpaket 3 sind umfangsseitig eine Anzahl von Magneten 6 gehalten. Diese sind hinsichtlich deren dem Rotorblechpaket 3 zugewandten und an diesem anliegenden Innen- oder Anlageseite 6a ebenso wie hinsichtlich deren dem Rotorblechpaket 3 abgewandten und einem strichliniert angedeuteten Luftspalt 7 zu einem nicht dargestellten Stator zugewandten Außenseite 6b praktisch an eine ideale Kreisform angepasst. Mit der inneren Anlageseite 6a liegen die Magnete 6 an kreisbogenförmigen Ausnehmungskanten 8 entsprechende Ausnehmungen 9 der Einzelbleche 4, 5 an, die im nachfolgenden auch als Blechstapel bezeichneten Rotorblechpakete 3 entsprechende Aufnahmetaschen 10 für die Magnete 6 bilden.

Der dargestellte Rotor 1 ist Teil einer elektrischen Maschine, insbesondere eines Elektromotors. Der Rotor 1 ist hierzu vom nicht dargestellten Stator konzentrisch unter Bildung des Luftspalts 7 umgeben, wobei der Stator in an sich bekannter Weise mit Spulenwicklungen versehen ist. Bei deren Bestromung wird ein magnetisches Drehfeld erzeugt, in welchem der Rotor 1 rotiert.

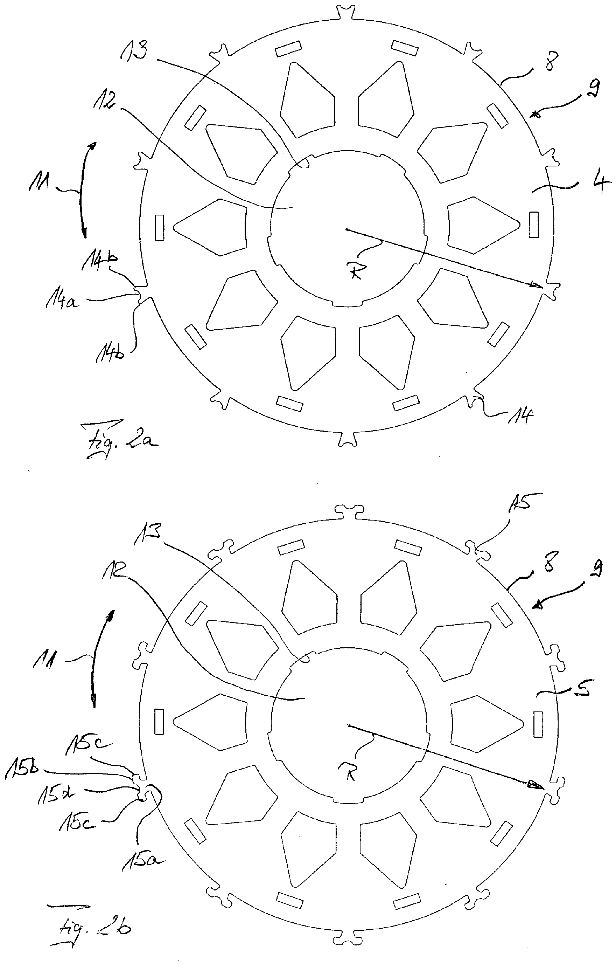

Wie in Verbindung mit den Fig. 2a und 2b ersichtlich ist, sind im Blechstapel 3 alternierend eine Vielzahl von Einzelblechen in Stapelrichtung A übereinander angeordnet. Dabei sind vorzugsweise alternierend Einzelbleche des in Fig. 2a gezeigten ersten Einzelblechtyps 4 und Einzelbleche des in Fig. 2b gezeigten zweiten Einzelblechtyps 5, die in der bezüglich der Welle 2 die Axialrichtung darstellenden Stapelrichtung A aufeinanderfolgen. Die Einzelblechtypen 4 und 5 sind hinsichtlich deren die Ausnehmungen 9 bildenden und sich zur geschlossenen Kreisform in Umfangsrichtung 11 einander anschließenden kreisbogenförmigen Ausnehmungskanten 8 einem praktisch idealen Kreis angepasst.

Eine zentrale Durchgangsöffnung 12 mit sich radial erstreckenden Einkerbungen oder Nuten 13 dient zur verdrehsicheren Aufnahme der Welle 2, die hierzu nicht sichtbare Fügekonturen oder Zapfen aufweist, die in die radialen Einkerbungen 13 formschlüssig eingreifen.

Das Rotorblechpaket 3 ist im Ausführungsbeispiel aus zwei Teilblechpaketen 3a und 3b zusammengesetzt. Jedes Teilblechpaket 3a, 3b ist aus einer Mehrzahl von Einzelblechen beider Blechtypen 4, 5 zusammengesetzt und mit den umfangsseitigen Magneten 6 versehen. Die mit den Magneten 6 versehenen Teilblechpakete 3a, 3b sind auf der Rotor- bzw. Maschinenwelle 2 mit einem gewissen Verdrehwinkel um die Wellenachse angebracht werden, so dass eine Schränkung der Magnete 6 am Rotor 1 der elektrischen Maschine entsteht.

Wie aus den Figuren 2a und 2b ersichtlich ist, weisen beide Einzelblechtypen 4, 5 sich in Radialrichtung R erstreckende (radiale) Vorsprünge 14 bzw. 15 auf, welche jeweils paarweise eine der Ausnehmungen 9 in Umfangsrichtung 11 begrenzen. Beide Einzelblechtypen 4, 5 sind zudem sowohl hinsichtlich der Bogenlänge der Ausnehmungen 9 als auch der umfangsseitig verteilten Anordnung der radialen Vorsprünge 14, 15 symmetrisch.

Unter Symmetrie wird hierbei insbesondere auch verstanden, dass die Einzelbleche 4, 5 innerhalb des Blechstapels 3 in Stapelrichtung A derart übereinander und aneinander anliegend angeordnet sind, dass die radialen Vorsprünge 14, 15 miteinander fluchtend aufeinander liegen, dass die radialen Vorsprünge 14 des ersten Einzelblechtyps 4 in Umfangsrichtung 11 zueinander sowie bezüglich der radialen Vorsprünge 15 des zweiten Einzelblechtyps 5 äquidistant angeordnet sind, und dass die Ausnehmungen 9 beider Blechtypen 4, 5 im Blechstapel 3 in Stapelrichtung A miteinander fluchten.

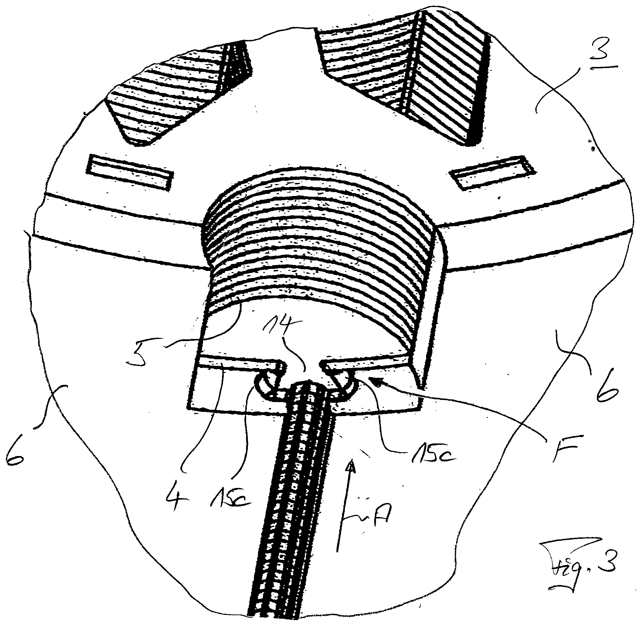

Die radialen Vorsprünge oder Fortsätze 14 des ersten Einzelblechtyps 4 gemäß Fig. 2a bilden Stützvorsprünge. Der erste Einzelblechtyp 4 kann somit als Stützronde bezeichnet werden. Die radialen Vorsprünge oder Fortsätze 15 des zweiten Einzelblechtyps 5 bilden Haltevorsprünge, so dass der zweite Einzelblechtyp 5 als Halteronde bezeichnet werden kann. Innerhalb des Blechstapels 3 stützen die Stützvorsprünge 14 des ersten Einzelblechtyps 4 die Haltevorsprünge 15 des zweiten Einzelblechtyps 5, wie nachfolgend anhand der Fig. 3 näher erläutert wird.

Die Stützvorsprünge 14 des ersten Einzelblechtyps 4 sind geeigneterweise trapezförmig, wobei die vergleichsweise lange Grundseite der Trapezform der Ausnehmungskante 8 abgewandt und dem Luftspalt 7 zugewandt ist. Mit anderen Worten sind die Stützvorsprünge 14 zum Luftspalt 7 hin aufgeweitet. Dort ist in den jeweiligen Stützvorsprung 14 eine radial eingezogene Einkerbung 14a unter Bildung zweier Fügezapfen 14b eingebracht.

Die Haltevorsprünge 15 des zweiten Einzelblechtyps 5 sind etwa T-förmig. Ein hierdurch gebildeter radialer Abschnitt (Vertikalschenkel der T-Form) dient als Anlagesteg 15a zur Anlage des Haltevorsprungs 15 an einem korrespondierenden und hiermit fluchtenden Stützvorsprung 14 eines im Blechstapel 3 benachbarten Einzelblechs des ersten Einzelblechtyps 4. Der sich an den Anlagesteg 15a am der Ausnehmungskante 8 abgewandten Ende anschließende Quersteg 15b (Horizontalschenkel der T-Form) verläuft tangential oder azimutal und bildet beidseitig, d.h. im Uhrzeigersinn und im Gegenuhrzeigersinn jeweils eine Haltelasche 15c aus. Eine in den Haltevorsprung 15 und dort in dessen Quersteg 15b eingebrachte radiale Einkerbung 15d erhöht die Biege- oder Verformungselastizität der beiden Haltelaschen 15c. Im Blechstapel 3 überragt der jeweilige Haltevorsprung 15 mit dessen Haltelaschen 15c den korrespondierenden Stützsteg 14 des in Stapelrichtung A folgenden Einzelblechs des ersten Einzelblechtyps 4.

Wie aus Fig. 1 in Verbindung mit Fig. 3 ersichtlich ist, erfolgt im Zuge des Einsetzens der Magnete 6 in die durch die Ausnehmungen 9 beider Einzelblechtypen 4, 5 gebildeten Aufnahmetaschen 10 eine Biegeverformung der Haltelaschen 15c der radialen Haltevorsprünge 15 der Einzelbleche des zweiten Einzelblechtyps 5 allein in Stapel- oder Axialrichtung A. Der hierzu erforderliche Frei- oder Biegefreiraum F, in welchen die Haltelaschen 15c einbiegen können, wird aufgrund der vergleichsweise geringen Abmessungen der radialen Stützvorsprünge 14 der Einzelbleche des ersten Einzelblechtyps 4 bereitgestellt.

Eine besonders zuverlässige Fixierung der Magnete 6 in den Aufnahmetaschen 10 des Rotorblechpakets 3 wird dadurch erreicht, dass die Magnete 6 an deren den radialen Vorsprüngen 14, 15 zugewandten Schmalseiten axiale Einkerbungen 16 aufweisen. Diese bilden Hinterschnitte für sowohl die radialen Stützvorsprünge 14 bzw. deren Stützstreben 14b als auch für die radialen Haltevorsprünge 15 bzw. deren Haltelaschen 15c. Während jedoch die Haltestege 14b der Stützvorsprünge 14 lediglich formschlüssig in diese Einkerbungen oder Hinterschnitte 16 der Magnete 6 eingreifen, erfolgt mittels der radialen Haltevorsprünge 15 bzw. deren Haltelaschen 15c aufgrund deren Biegeverformung zusätzlich zu einer formschlüssigen auch eine kraftschlüssige Fügeverbindung mit der Folge einer zuverlässigen Klemmhalterung der Magnete 6 in bzw. am Rotorblechpaket 3.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den Ausführungsbeispielen beschriebene Einzelmerkmale auch auf andere Weise miteinander kombinierbar, ohne den Gegenstand der Erfindung zu verlassen.

So kann beispielsweise die Anzahl der Einzelbleche des ersten Blechtyps 4 innerhalb des Rotorblechpakets 3 bzw. eines Teilblechpakets 3a, 3b geringer oder auch wesentlich weniger sein als die Anzahl der Einzelbleche des zweiten Blechtyps 5. Auch können die magnetseitigen Einkerbungen 16 und/oder die Haltelaschen 15c der radialen Haltevorsprünge 15 des zweiten Einzelblechtyps 5 derart ausgestaltet sein, dass die Haltelaschen 15c ohne Verformung in die Einkerbungen 16 der Magnete 6 eingreifen. Zudem können mehr als zwei, insbesondere gegeneinander verdrehte, Teilblechpakete vorgesehen sein.

### Bezugszeichenliste

- 1: Rotor
- 2: Welle
- 3: Rotorblechpaket
- 3a,b: Teilblechpaket
- 4: erster Einzelblechtyp
- 5: zweiter Einzelblechtyp
- 6: Magnet
- 6a: Anlageseite
- 6b: Außenseite
- 7: Luftspalt
- 8: Ausnehmungskante
- 9: Ausnehmung
- 10: Aufnahmetasche
- 11: Umfangsrichtung
- 12: Durchgangsöffnung
- 13: Einkerbung/Nut
- 14: radialer Vorsprung/Fortsatz
- 14a: Einkerbung
- 14b: Fügezapfen
- 15: radialer Vorsprung/Fortsatz
- 15a: Anlagesteg
- 15b: Quersteg
- 15c: Haltelasche
- 15d: Einkerbung
- 16: Einkerbung/Hinterschnitt

- A: Axial-/Stapelrichtung
- F: Biege-/Freiraum
- R: Radialrichtung

## Patentansprüche

1. Rotorblechpaket (3), insbesondere für einen Elektromotor, mit in Stapelrichtung (A) übereinander angeordneten Einzelblechen (4, 5) mit einer Anzahl von zwischen radialen Vorsprüngen (14,15) gebildeten Ausnehmungen (9), die im Blechstapel miteinander fluchten und umfangsseitig offene Aufnahmetaschen (10) für Permanentmagnete (6) bilden,
- wobei ein erster Einzelblechtyp (4) eine Anzahl radialer Stützvorsprünge (14) und ein zweiter Einzelblechtyp (5) eine entsprechende Anzahl radialer Haltevorsprünge (15) mit sich in Umfangsrichtung (11) erstreckenden Haltelaschen (15c) aufweist,
- wobei im Blechstapel die Stützvorsprünge (14) mit den Haltevorsprüngen (15) fluchten und deren Haltelaschen (15c) den jeweiligen Stützvorsprung (14) in Umfangsrichtung (11), vorzugsweise beidseitig, überragen,
- wobei die Permanentmagnete (6) an deren den radialen Vorsprüngen (14, 15) zugewandten Schmalseiten sich in Stapelrichtung (A) erstreckende Einkerbungen (16) aufweisen, in welche die Stützvorsprünge (14) des ersten Einzelblechtyps (4) und die Haltelaschen (15) des zweiten Einzelblechtyps (5) formschlüssig eingreifen, und
- wobei die Stützvorsprünge (14) des ersten Einzelblechtyps (4) sich in Stapelrichtung (A) erstreckende Freiräume (F) bilden, in welche die Haltelaschen (15c) der Haltevorsprünge (15) des zweiten Einzelblechtyps (15) bei in die Ausnehmungen (9) eingesetzten Permanentmagneten (6) einbiegen.

2. Rotorblechpaket (3) nach Anspruch 1,
**dadurch gekennzeichnet,**
**dass** die zwischen den radialen Vorsprüngen (14, 15) gebildeten Ausnehmungen (9) beider Einzelblechtypen (4, 5) kreisbogenförmig mit gleicher Bogenlänge ausgebildet sind.

3. Rotorblechpaket (3) nach Anspruch 1 oder 2,
**dadurch gekennzeichnet,**
**dass** sowohl die Stützvorsprünge (14) des ersten Einzelblechtyps (4) als auch die Haltevorsprünge (15) des zweiten Einzelblechtyps (5) symmetrisch sind.

4. Rotorblechpaket (3) nach einem der Ansprüche 1 bis 3,
**dadurch gekennzeichnet,**
**dass** sowohl die Stützvorsprünge (14) des ersten Einzelblechtyps (4) als auch die Haltevorsprünge (15) des zweiten Einzelblechtyps (5) äquidistant am Blechumfang verteilt angeordnet sind.

5. Rotorblechpaket (3) nach einem der Ansprüche 1 bis 4,
**dadurch gekennzeichnet,**
**dass** die Haltevorsprünge (15) des zweiten Einzelblechtyps (5) aus einem sich radial erstreckenden Anlagesteg (15a) sowie einem mit diesem endseitig verbundenen und sich tangential oder azimutal erstreckenden Quersteg (15b) gebildet sind, der endseitig, vorzugsweise beidendseitig, die jeweilige Haltelasche (15c) bildet.

6. Rotorblechpaket (3) nach einem der Ansprüche 1 bis 5,
**dadurch gekennzeichnet,**
**dass** die Stützvorsprünge (14) des ersten Einzelblechtyps (4) trapezförmig mit freiendseitig der vergleichsweise langen Grundseite ausgebildet sind.

7. Rotorblechpaket (3) nach einem der Ansprüche 1 bis 6,
**dadurch gekennzeichnet,**
**dass** die Stützvorsprünge (14) des ersten Einzelblechtyps (4) und/oder die Haltevorsprünge (15) des zweiten Einzelblechtyps (5) freiendseitig eine radial einwärts gerichtete Einkerbung (14a, 15d) aufweisen.

8. Rotorblechpaket (3) nach einem der Ansprüche 1 bis 7,
**dadurch gekennzeichnet,**
**dass** der erster Einzelblechtyp (4) und der zweite Einzelblechtyp (5) im Blechstapel in Stapelrichtung (A) alternierend übereinander angeordnet sind.

9. Rotor (1) mit einer Rotorwelle (2) und darauf wellenfest angeordnetem Rotorblechpaket (3) nach einem der Ansprüche 1 bis 8.

10. Rotor (1) nach Anspruch 9, bei dem das Rotorblechpaket (3) mindestens zwei gegeneinander verdrehte Teilblechpaket (3a, 3b) aufweist, deren jedes unverdreht gestapelte Einzelblechen des erster und zweiten Einzelblechtyps (4, 5) aufweist.

11. Elektrische Maschine mit einem Rotor (1) nach Anspruch 9 oder 10.

## Claims

1. Laminated rotor core (3), in particular for an electric motor, having single sheets (4, 5) arranged one over the other in the laminating direction (A), said single sheets (4, 5) having a number of recesses (9) formed between radial projections (14, 15), said recesses (9) aligning with one another in the laminated stack and forming receiving pockets (10) for permanent magnets (6) which are open at their periphery,
- wherein a first single sheet type (4) has a number of radial supporting projections (14) and a second single sheet type (5) has a corresponding number of radial holding projections (15) having holding tabs (15c) which extend in the peripheral direction (11),
- wherein the supporting projections (14) align with the holding projections (15) in the laminated stack and the holding tabs (15c) thereof project beyond the respective supporting projection (14) in the peripheral direction, preferably on both sides,
- wherein the permanent magnets (6) have indentations (16) which extend in the laminating direction (A) on their narrow sides facing towards the radial projections (14, 15), with which indentations (16) the supporting projections (14) of the first single sheet type (4) and the holding tabs (15) of the second single sheet type (5) engage with positive locking, and
- wherein the supporting projections (14) of the first single sheet type (4) form free spaces (F) which extend in the laminating direction (A), into which free spaces (F) the holding tabs (15c) of the holding projections (15) of the second single sheet type (15) enter when permanent magnets (6) are inserted into the recesses (9).

2. Laminated rotor core (3) according to claim 1, **characterised in that** the recesses (9) of both single sheet types (4, 5) which are formed between the radial projections (14, 15) are formed in the shape of a circular arc having the same arc length.

3. Laminated rotor core (3) according to claim 1 or 2, **characterised in that** both the supporting projections (14) of the first single sheet type (4) and the holding projections (15) of the second single sheet type (5) are symmetrical.

4. Laminated rotor core (3) according to one of claims 1 to 3, **characterised in that** both the supporting projections (14) of the first single sheet type (4) and the holding projections (15) of the second single sheet type (5) are arranged to be distributed equidistantly on the periphery of the sheet.

5. Laminated rotor core (3) according to one of claims 1 to 4, **characterised in that** the holding projections (15) of the second single sheet type (5) are formed from a contact bar (15a) extending radially and a crossbar (15b) connected to this at the end side and extending tangentially or azimuthally, which forms the respective holding tab (15c) on the end side, preferably on both end sides.

6. Laminated rotor core (3) according to one of claims 1 to 5, **characterised in that** the supporting projections (14) of the first single sheet type (4) are formed trapezoidally with the comparatively long base side on the free end side.

7. Laminated rotor core (3) according to one of claims 1 to 6, **characterised in that** the supporting projections (14) of the first single sheet type (4) and/or the holding projections (15) of the second single sheet type (5) have a radially inwardly directed indentation (14a, 15d) on the free end side.

8. Laminated rotor core (3) according to one of claims 1 to 7, **characterised in that** the first single sheet type (4) and the second sheet type (5) are arranged in the laminated stack alternatingly one over the other in the laminating direction (A).

9. Rotor (1) having a rotor shaft (2) and a laminated rotor core (3) according to one of claims 1 to 8 which is arranged thereon fixed to the shaft.

10. Rotor (1) according to claim 9, wherein the laminated rotor core (3) has at least two laminated core assemblies (3 a, 3b) which are twisted with respect to each other, each of which has untwisted stacked single sheets of the first and second single sheet type (4, 5).

11. Electrical machine having a rotor (1) according to claim 9 or 10.

## Revendications

1. Paquet de tôles de rotor (3), en particulier pour un moteur électrique, avec dans une direction d'empilement (A) des tôles individuelles (4, 5) agencées l'une sur l'autre avec un certain nombre d'évidements (9) formés entre des saillies (14, 15) radiales et qui sont mutuellement alignés dans l'empilement de tôles et forment sur la circonférence des poches de logement (10) ouvertes pour des aimants permanents (6),
dans lequel un premier type de tôle individuelle (4) présente un certain nombre de saillies de retenue (14) radiales et un second type de tôle individuelle (5) un nombre correspondant de saillies de retenue (15) radiales et avec elles des pattes de retenue (15c) s'étendant dans la direction circonférentielle (11),
dans lequel dans l'empilement de tôles les saillies de retenue (14) sont alignées avec les saillies de retenue (15) et dont les pattes de retenue (15c) dépassent la saillie de retenue (14) respective dans la direction circonférentielle (11), de préférence des deux côtés,
dans lequel les aimants permanents (6) au niveau des petits côtés desquels qui sont orientés vers les saillies (14, 15) radiales, des encoches (16) se présentent s'étendant dans une direction d'empilement (A), dans lesquelles les saillies de retenue (14) du premier type de tôle individuelle (4) et les saillies de retenue (15) du second type de tôle individuelle (5) s'engagent par coopération de forme, et
dans lequel les saillies de retenue (14) du premier type de tôle individuelle (4) prennent la forme d'espaces libres (F) s'étendant dans une direction d'empilement (A), dans lesquels les pattes de retenue (15c) des saillies de retenue (15) du second type de tôle individuelle (15) tournent sous l'action des aimants permanents (6) installés dans les évidements (9).

2. Paquet de tôles de rotor (3) selon la revendication 1,
**caractérisé en ce que**
les évidements (9) formés entre les saillies (14, 15) radiales des deux types de tôle individuelle (4, 5) sont formés en arc de cercle avec la même longueur d'arc.

3. Paquet de tôles de rotor (3) selon la revendication 1 ou 2,
**caractérisé en ce que**
tant les saillies de retenue (14) du premier type de tôle individuelle (4) que les saillies de retenue (15) du second type de tôle individuelle (5) sont symétriques.

4. Paquet de tôles de rotor (3) selon l'une quelconque des revendications 1 à 3,
**caractérisé en ce que**
tant les saillies de retenue (14) du premier type de tôle individuelle (4) que les saillies de retenue (15) du second type de tôle individuelle (5) sont agencées en étant distribuées à équidistance sur la circonférence des tôles.

5. Paquet de tôles de rotor (3) selon l'une quelconque des revendications 1 à 4,
**caractérisé en ce que**
les saillies de retenue (15) du second type de tôle individuelle (5) sont formées d'une barrette d'application (15a) s'étendant radialement ainsi que d'une barrette transversale (15b) raccordée à celle-ci sur une extrémité et s'étendant de manière tangentielle ou azimutale, laquelle forme la patte de retenue (15c) respective sur une extrémité, de préférence sur deux extrémités.

6. Paquet de tôles de rotor (3) selon l'une quelconque des revendications 1 à 5,
**caractérisé en ce que**
les saillies de retenue (14) du premier type de tôle individuelle (4) sont formées de façon trapézoïdale avec du côté de l'extrémité libre le côté de base relativement long.

7. Paquet de tôles de rotor (3) selon l'une quelconque des revendications 1 à 6,
**caractérisé en ce que**
les saillies de retenue (14) du premier type de tôle individuelle (4) et/ou les saillies de retenue (15) du second type de tôle individuelle (5) présentent du côté de l'extrémité libre une encoche (14a, 15d) orientée radialement vers l'intérieur.

8. Paquet de tôles de rotor (3) selon l'une quelconque des revendications 1 à 7,
**caractérisé en ce que**
le premier type de tôle individuelle (4) et le second type de tôle individuelle (5) sont agencés l'un sur l'autre de manière alternée dans l'empilement de tôles dans une direction d'empilement (A).

9. Rotor (1) avec un arbre de rotor (2) et dessus, agencé de manière fixe sur l'arbre, un paquet de tôles de rotor (3) selon l'une quelconque des revendications 1 à 8.

10. Rotor (1) selon la revendication 9, chez lequel le paquet de tôles de rotor (3) présente au moins deux paquet de tôles partiels (3a, 3b) faussés l'un par rapport à l'autre, dont chaque tôle individuelle empilée sans être faussée du premier et second type de tôle individuelle (4, 5) présente.

11. Machine électrique avec un rotor (1) selon la revendication 9 ou 10.
